# EUROPEAN PATENT APPLICATION

(11) **EP 3 483 334 A1**
(43) Date of publication of application: **15.05.2019**
(21) Application number: 17823584.2
(22) Date of filing: 03.07.2017
(51) Int. Cl.: D06F 58/28

(54) **METHOD FOR ADJUSTING QUANTITY OF CONDENSING MEDIA ACCORDING TO CONTROL PERIOD OF HEATER**

(30) Priority: 05.07.2016 CN 201610524993
(71) Applicant: Qingdao Haier Drum Washing Machine Co., Ltd., Qingdao, Shandong 266101 (CN)
(72) Inventor: SONG, Huacheng, Qingdao Shandong 266101 (CN); XU, Sheng, Qingdao Shandong 266101 (CN); TIAN, Shujun, Qingdao Shandong 266101 (CN); XU, Yonghong, Qingdao Shandong 266101 (CN); ZHANG, Lijun, Qingdao Shandong 266101 (CN)
(74) Representative: Beck & Rössig European Patent Attorneys
(86) International application number: PCT/CN2017/091442
(87) International publication number: WO 2018/006772

(57) **Abstract**

A method for adjusting the amount of a condensing medium according to control period of a heater is provided, including the following steps: S1, starting to dry clothes, and detecting an outlet air temperature of a clothes dryer to make sure that the outlet air temperature reaches a set temperature value; S2, calculating a time value from the start of the clothes drying to the time when the outlet air temperature reaches the set temperature value; S3, determining the control period of the heater; and S4, adjusting a supplying rhythm of the condensing medium according to the control period of the heater determined in the S3. In the process of switching on the clothes dryer till the outlet air temperature of the clothes dryer reaches the set temperature value, the supplying of the condensing medium is shut off. The clothes dryer may adjust the supplying amount of the condensing medium according to changes of the control period of the heater, so as to guarantee the clothes drying efficiency and avoid the waste of the condensing medium at the same time.

## Description

### TECHNICAL FIELD

The present disclosure belongs to the technical field of clothes dryers, and more particularly relates to a method of adjusting the amount of a condensing medium according to a control period of a heater.

### BACKGROUND

A clothes dryer generally has a drum for accommodating fabrics to be dried and a condensing apparatus communicating with a space of the drum. Process air is in contact with the wet fabrics in the drum after being heated to evaporate water in the fabrics, and then becomes wet. The wet and hot process air then enters the condensing apparatus. In the condensing apparatus, the process air exchanges heat with a lower temperature condensing medium, so the water in the process air is condensed and separated from the process air. In the whole drying process of the clothes dryer, the water content of air near the condensing apparatus is varying, so that the power required by clothes dryer for the condensing apparatus is different in the whole working process. In case of adoption of a working mode of keeping the power of the condensing apparatus unchanged in the whole working process in a traditional clothes dryer, waste of the power of the condensing apparatus would be certainly caused, thus wasting resources.

The Chinese patent No.201410479955.X discloses a clothes dryer and a drying method thereof. Specifically, the clothes dryer includes a control apparatus, a drum for accommodating fabrics to be dried, and a condensing apparatus communicating with a space of the drum. The condensing apparatus includes a condensing medium supplying apparatus. The method includes determining a supplying rhythm of a condensing medium in a drying process at least according to a temperature of the condensing medium. The present disclosure further discloses that in the drying process, the control apparatus continuously detects changes of information of the fabrics in the drum and/or information changes of the process air participating in drying, and adjusts the supplying rhythm of the condensing medium according to the changes of the information of the fabrics in the drum and/or the information changes of the process air participating in drying. This patent emphatically describes a method for adjusting the supplying rhythm of the condensing medium according to the temperature of the condensing medium, but this method has the problems that: I, the temperature of the condensing medium varies with the heat dissipation of outlet air of the clothes dryer, so that it is indirect to reflect the drying process through a temperature change of the condensing medium; and II, the condensing medium, particularly water, is relatively high in specific heat capacity, so that the temperature reaction of the condensing medium is not sensitive enough to further affect the accuracy of the whole supplying adjustment of the condensing medium.

In order to reduce the water consumption, an existing condensing clothes dryer has the following improvements in control of feeding condensing water. On-off control of water feeding is realized according to time nodes. For example, after the drying is started, water feeding is controlled by a mode of cyclically feeding water for 15 seconds and then stopping the water feeding for 5 seconds. However, this mode does not consider the humidity influence on the fabrics, so that if only the supplying amount of the water is reduced, the condensation is not sufficient, the drying time is prolonged, and the energy consumption is increased.
In view of this, the present disclosure is provided.

### SUMMARY

The present disclosure provides a method for adjusting the amount of a condensing medium according to a control period of a heater so as to overcome the shortcomings in the prior art.

To solve the above-mentioned technical problems, the basic idea of the technical solution of the present disclosure is that:
a method for adjusting the amount of a condensing medium according to a control period of a heater, including the following steps:
S1, starting to dry clothes, and detecting an outlet air temperature of a clothes dryer to make sure that the outlet air temperature reaches a set temperature value;
S2, calculating a time value from the start of the clothes drying to the time when the outlet air temperature reaches the set temperature value;
S3, determining the control period of the heater; and
S4, adjusting a supplying rhythm of the condensing medium according to the control period of the heater determined in the S3.

Further, an operation state of the heater is determined according to the time value when the outlet air temperature of the clothes dryer reaches the set temperature value, or the operation state of the heater is determined according to a time value when an inlet air temperature of the clothes dryer reaches a set inlet temperature value.

Preferably, the larger the time value when the outlet air temperature of the clothes dryer reaches the set temperature value is, the greater the unit time length of switching on the heater is, and the longer the time of supplying the condensing medium is, or more condensing mediums are supplied; or, the larger the time value when the inlet air temperature of the clothes dryer reaches the set inlet air temperature value is, the greater the unit time length of switching on the heater is, and the longer the time of supplying the condensing medium is, or the more the supplied condensing medium is.

Further, the greater the ratio of the unit time length of switching on the heater to the unit time length of switching off the heater is, the greater the unit time length of supplying the condensing medium is or the more the supplied condensing medium is within a unit time.

Further, in the S4, the supplying amount of the condensing medium within the unit time is adjusted according to the state of the control period of the heater.

Further, when the heater is switched on, the supplying amount of the condensing medium within the unit time is large; and when the heater is switched off, the supplying amount of the condensing medium within the unit time is small.

Further, the supplying amount of the condensing medium within the unit time varies by controlling the opening position of a condensing medium valve.

Or, a replacement solution is that in the S4, the unit time length of supplying the condensing medium is adjusted according to the state of the control period of the heater.

Further, when the heater is switched on, the unit time length of supplying the condensing medium is prolonged; and when the heater is switched off, the unit time length of supplying the condensing medium is shortened.

Further, the unit time length of supplying the condensing medium varies by controlling the opening time and the closing time of the condensing medium valve.

Further, the rise rate of the outlet air temperature is increased, the switching-on and switching-off interval of the heater is shortened, the supplying amount of the condensing medium within the unit time is reduced, or the unit time length of supplying the condensing medium is shortened.

The clothes dryer of the present disclosure includes a control apparatus, a heater, a drum for accommodating fabrics to be dried, a condensing apparatus communicating with a space of the drum, and a first temperature detection apparatus for detecting an outlet air temperature. The condensing apparatus includes a condensing medium supplying apparatus and a condensing medium valve. The control apparatus is configured to control the work of the condensing medium valve according to the above-mentioned method.

After the clothes dryer is switched on, the control apparatus controls the heater to work to provide heated air into the drum. After the heated air exchanges heat with fabrics in the drum, water in the fabrics is evaporated into water vapors and is discharged from the drum. The first temperature detection apparatus detects the outlet air temperature, and the control apparatus controls the opening and the closing of the condensing medium valve according to the detected outlet air temperature.

The present disclosure determines an operation state of the heater and opening of the condensing medium valve according to the time value when the detected outlet air temperature reaches the set temperature value, and determines a supplying rhythm of the condensing medium according to the state of the control period of the heater.

The time period from the start of the clothes drying to the time when the outlet air temperature reaches the set temperature value is an early stage of clothes drying. In this stage, the control apparatus controls the condensing medium valve to be closed to not provide the condensing medium. The time length of the early stage affects the operation state of the heater. If the early stage lasts for a longer time, it is indicated that the fabrics contain more water, the switching-on time of the heater is longer, and the time for subsequently supplying the condensing medium is longer. When the outlet air temperature rises to the set temperature value, the control apparatus controls the opening time and the closing time or opening position of the condensing medium valve according to the switching-on and switching-off interval of the heater to condense the water in the outlet air at a set rhythm. As most of the heat of air entering the drum is absorbed by the water in the fabrics, the outlet air temperature varies a little, and at the moment, the amount of evaporated water is the largest. In this stage, the time length of supplying the condensing medium is prolonged, or the supplying amount of the condensing medium is increased. Along with the clothes drying, more and more water in the fabrics is evaporated, so that the varying rate of the outlet air temperature is increased, the switching-on and switching-off interval of the heater is shortened, the supplying amount of the condensing medium within the unit time is reduced, or the unit time length of supplying the condensing medium is shortened.

Or, the clothes dryer is further provided with a second temperature detection apparatus for detecting an inlet air temperature, and determines the operation state of the heater according to a time value when the detected inlet air temperature reaches a set inlet temperature value.

By adoption of the above-mentioned technical solution, compared with the prior art, the present disclosure has the following beneficial effects that: the clothes dryer of the present disclosure may adjust the supplying amount of the condensing medium according to the change of the control period of the heater, so as to guarantee the clothes drying efficiency and avoid the waste of the condensing medium.

Specific embodiments of the present disclosure are further described below in detail in combination with accompanying drawings.

### BRIEF DESCRIPTION OF THE DRAWINGS

As one part of the present disclosure, the accompanying drawings are used to provide further understandings of the present disclosure. Schematic embodiments and descriptions thereof of the present disclosure are used for explaining the present disclosure, but do not constitute improper limitations to the present disclosure. Obviously, the accompanying drawings in the descriptions below are only some embodiments. Those of ordinary skill in the art can further obtain other drawings according to these drawings without paying creative work. In the drawings:

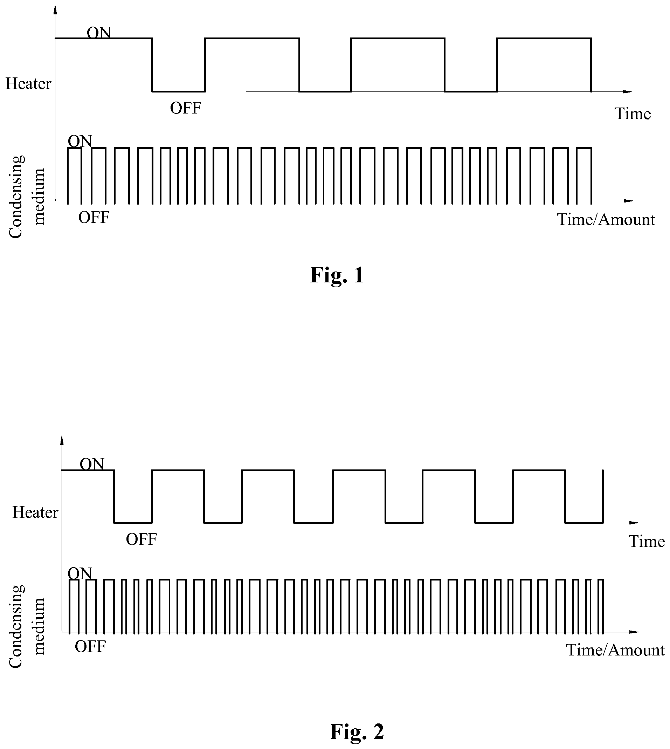

Fig. 1 and Fig. 2 are schematic diagrams of changes of the supplying amount of a condensing medium in correspondence to different working periods of a heater of the present disclosure.

It should be noted that these drawings and textual descriptions are not intended to limit the conceptual scope of the present disclosure in any mode, but are to describe the concept of the present disclosure for those skilled in the art by referring to specific embodiments.

### DETAILED DESCRIPTION

To make the objectives, technical solutions and advantages of embodiments of the present disclosure clearer, the technical solutions in the embodiments are clearly and completely described below in combination with the accompanying drawings in the embodiments of the present disclosure. The following embodiments are used to describe the present disclosure, but not intended to limit the scope of the present disclosure.

A clothes dryer of the present disclosure has a tank body and a drum arranged in the tank body and used for accommodating fabrics to be dried. An air inlet and an air outlet of the drum respectively communicate with a heater and a condensing apparatus. An air blowing apparatus is connected between the heater and the condensing apparatus so as to promote air to be circulated among the drum, the heater and the condensing apparatus. In addition, the air outlet of the drum is further provided with a first temperature detection apparatus so as to acquire an outlet air temperature.

The condensing apparatus includes an air channel and a condensing medium supplying apparatus. The condensing medium supplying apparatus includes a condensing medium path related to the air channel in a thermal conduction manner, a supplying element for supplying the condensing medium and a condensing medium valve arranged on the condensing medium path. The opening and closing of the condensing medium valve are controlled by the control apparatus. The first temperature detection apparatus is electrically connected with the control apparatus so as to send detected temperature information to the control apparatus. The heater is electrically connected with the control apparatus, so that the control apparatus controls the heater to be switched on and switched off.

In one specific embodiment of the condensing apparatus, the condensing medium is cooling water, the supplying element is tap water, and the condensing medium valve is a water valve. The part, outside the air channel, of the condensing medium path is a water conveying pipeline, and the part, inside the air channel, of the condensing medium path may be provided with no independent pipeline and directly extend downwards along the inner wall of the air channel or implement downward spraying in the air channel.

In a clothes drying process, the heater heats air, and the air is conveyed into the drum through the air blowing apparatus and then is in contact with wet fabrics in the drum to evaporate water in the fabrics. The wet and hot air then enters the air channel of the condensing apparatus and exchanges heat with the condensing medium in the condensing medium path, so the temperature of outlet air is reduced, and the water is condensed and then separated from the outlet air. Later, the dried condensed air enters the heater again and is heated to enter the next cycle, so as to gradually separate the water from the fabrics.

In the above-mentioned clothes drying process, the supplying of the condensing medium is determined by the condensing medium valve and controlled by the control apparatus. An operation state of the heater is determined according to a time value, detected by the first temperature detection apparatus, when the outlet air temperature reaches a set temperature value and according to a varying state of the outlet air temperature. The condensing medium valve is opened/closed according to a working state of the heater. The larger the time value when the outlet air temperature of the clothes dryer reaches the set temperature value is, the greater the unit time length of switching on the heater is, and the longer the time of supplying the condensing medium is, or the more the supplied condensing mediums is.

Or, the clothes dryer is further provided with a second temperature detection apparatus for detecting an inlet air temperature, and determines the operation state of the heater according to a time value when the detected inlet air temperature reaches a set inlet temperature value. The larger the time value when the inlet air temperature of the clothes dryer reaches the set inlet temperature value is, the greater the unit time length of switching on the heater is, and the longer the time of supplying the condensing medium is, or the more the supplied condensing medium is.

Further, the larger the ratio of the unit time length of switching on the heater to the unit time length of switching off the heater is, the greater the unit time length of supplying the condensing medium is or the more the supplied condensing medium is within a unit time.

As shown in Fig. 1 and Fig. 2, they are respective schematic diagrams of changes of the supplying amount of a condensing medium in correspondence to different working periods of the heater of the present disclosure.

A method for adjusting the amount of a condensing medium according to a control period of a heater includes the following steps that:
S1, clothes are started to be dried, and an outlet air temperature of a clothes dryer is detected to make sure that the outlet air temperature reaches a set temperature value;
S2, a time value from the start of clothes drying to the time when the outlet air temperature reaches the set temperature value is calculated;
S3, the control period of the heater is determined; and
S4, a supplying rhythm of the condensing medium is adjusted according to the control period, determined in the S3, of the heater.

Further, to make sure that fabrics in a clothes drying drum reach a required temperature as fast as possible, when the clothes are started to be dried, namely before the outlet air temperature reaches the set temperature value, no water is supplied. As the fabrics in the clothes drying drum in this period is in a temperature rise stage and a little of water is evaporated, and supplying water would certainly affect the temperature rise rate of the fabrics in the clothes drying drum and is unfavorable for the evaporation of the whole drying period.

During specific operation, the set temperature value in the S 1 of the clothes dryer may be set at 50 °C, and water is selected as the condensing medium. If the time value when the outlet air temperature of the clothes dryer reaches the set temperature 50 °C is larger, it is indicated that the fabrics contain more water, so that the time of supplying the condensing water shall be longer. If the time value when the outlet air temperature of the clothes dryer reaches the set temperature is smaller, it is indicated that the fabrics contain less water, so that the time of supplying the condensing water shall be shorter.

The control period of the heater in the S3 includes two periods. Each period includes unit time lengths, determined according to a varying rate of the outlet air temperature and corresponding to heater ON and heater OFF as shown in Fig. 1 and Fig. 2, of switching on and switching off the heater. In the middle of the clothes drying, the varying rate of the outlet air temperature is less than a set varying rate. In the later stage of the clothes drying, the varying rate of the outlet air temperature is greater than the set varying rate. The rise rate of the outlet air temperature is increased, the switching-on and switching-off interval of the heater is shortened, the supplying amount of the condensing medium within the unit time is reduced, or the unit time length of supplying the condensing medium is shortened.

### Embodiment I

In the S4, the supplying amount of the condensing medium within the unit time is adjusted according to the state of the control period of the heater.

When the heater is switched on, the supplying amount of the condensing medium within the unit time is large; and when the heater is switched off, the supplying amount of the condensing medium within the unit time is small.

In the present embodiment, the supplying amount of the condensing medium within the unit time varies by controlling the opening position of the condensing medium valve.

### Embodiment II

In the present embodiment, in the S4, the unit time length of supplying the condensing medium is adjusted according to the state of the control period of the heater.

When the heater is switched on, the unit time length of supplying the condensing medium is prolonged; and when the heater is switched off, the unit time length of supplying the condensing medium is shortened.

In the present embodiment, the unit time length of supplying the condensing medium varies by controlling the opening time and the closing time of the condensing medium valve.

The principle of the present disclosure is as follows.

The water in the fabrics in the whole working process of the clothes dryer is gradually reduced, so that the working periods of the heater are different according to different stages of the drying process, and the supplying rhythm of the condensing water is finely adjusted in correspondence to the working periods of the heater. After the clothes dryer works for a period of time, most of heat of the air entering the clothes drying drum is absorbed by the water in the fabrics, so the outlet temperature varies slowly, and at the moment, the amount of evaporated water is the largest. In this period, the time of supplying the condensing water is relatively long or the supplying amount is relatively large. In the later stage of drying, along with the reduction of the water in the fabrics, the rise rate of the outlet temperature of the clothes dryer is increased, and at the moment, the time of supplying the condensing water is shortened or the supplying amount is reduced so as to implement condensation of the water in the outlet air of the clothes dryer.

Specifically, the time period from the starting of the clothes drying to the time when the outlet air temperature reaches the set temperature value is an early stage of clothes drying. In this stage, the control apparatus controls the condensing medium supplying apparatus to be closed to not provide the condensing medium. The time length of the early stage affects the supplying amount of the condensing medium. If the early stage lasts for a longer time, it is indicated that the fabrics contain more water, and the time for subsequently supplying the condensing medium is longer. In a temperature retention stage, in which the temperature tends to be stabilized, the heater may be controlled to be switched on and switched off according to the varying speed of the inlet temperature to maintain the inlet temperature at about 110 to 120 °C. Or, whether the heater is switched on or switched off is determined according to the time value when the outlet air temperature of the clothes dryer reaches the set temperature value. If the heater is ON, the outlet air may contain a large amount of water vapors due to the supplying of the heat of the inlet air. If the heater is OFF, the outlet air may contain a reduced amount of water vapors due to the reduction of the supplying of the heat. The supplying amount of the condensing medium is adjusted according to the operation state of the heater. When the heater is switched on, the unit time length of supplying the condensing water is longer or the supplying amount of the condensing water within the unit time is larger. When the heater is switched off, the unit time of supplying the condensing water is shorter or the supplying amount of the condensing water within the unit time is smaller.

Along with the drying, the humidity of the dried circulating air is reduced, and the air is heated to the target temperature more easily, so that the switching-on and switching-off interval of the heater is shortened, and the supplying amount of the condensing medium may be reduced with the shortening of the switching-on and switching-off interval of the heater.

In the later stage of the drying, the temperature rise rate is increased, so that less and less water is evaporated from the clothes, and the time of supplying the condensing water is shortened to implement condensation of the water in the air.

The above descriptions are only preferred embodiments of the present disclosure, but not intended to limit the present disclosure in any forms. Although the present disclosure is disclosed above by the preferred embodiments, the preferred embodiments are not intended to limit the present disclosure. Any persons skilled in the art can make some changes or embellishments that are equivalent embodiments in equivalent changes by using the above-mentioned disclosed technical contents without departing from the scope of the technical solution of the present disclosure. Any contents not departing from the technical solution of the present disclosure and any simple modifications, equivalent changes and embellishments that are made to the above embodiments according to the technical essence of the present disclosure shall all fall within the scope of the solution of the present disclosure.

## Claims

1. A method for adjusting an amount of a condensing medium according to a control period of a heater comprising following steps:
S1, starting to dry clothes, and detecting an outlet air temperature of a clothes dryer to determine that the outlet air temperature reaches a set temperature value;
S2, calculating a time value from a start of clothes drying to a time when the outlet air temperature reaches the set temperature value;
S3, determining the control period of the heater; and
S4, adjusting a supplying rhythm of the condensing medium according to the control period of the heater determined in the S3.

2. The method for adjusting the amount of the condensing medium according to the control period of the heater according to claim 1, wherein in a process of switching on the clothes dryer till the outlet air temperature of the clothes dryer reaches the set temperature value, a supplying of the condensing medium is shut off.

3. The method for adjusting the amount of the condensing medium according to the control period of the heater according to claim 1, wherein an operation state of the heater is determined according to the time value when the outlet air temperature of the clothes dryer reaches the set temperature value, or the operation state of the heater is determined according to a time value when an inlet air temperature of the clothes dryer reaches a set inlet temperature value.

4. The method for adjusting the amount of the condensing medium according to the control period of the heater according to claim 3, wherein the larger the time value when the outlet air temperature of the clothes dryer reaches the set temperature value is, the greater a unit time length of switching on the heater is, and the longer a time of supplying the condensing medium is, or the more the condensing medium is supplied;
or, the larger the time value when the inlet air temperature of the clothes dryer reaches the set inlet air temperature value is, the greater the unit time length of switching on the heater is, and the longer the time of supplying the condensing medium is , or the more the condensing medium is supplied.

5. The method for adjusting the amount of the condensing medium according to the control period of the heater according to claim 1, wherein the larger a ratio of a unit time length of switching on the heater to a unit time length of switching off the heater is, the greater the unit time length of supplying the condensing medium is or the more the condensing medium is supplied within a unit time.

6. The method for adjusting the amount of the condensing medium according to the control period of the heater according to any one of claims 1 to 5, wherein in the S4, the supplying amount of the condensing medium within the unit time is adjusted according to the state of the control period of the heater.

7. The method for adjusting the amount of the condensing medium according to the control period of the heater according to claim 6, wherein when the heater is switched on, the supplying amount of the condensing medium within the unit time is larger; and when the heater is switched off, the supplying amount of the condensing medium within the unit time is smaller.

8. The method for adjusting the amount of the condensing medium according to the control period of the heater according to claim 7, wherein the supplying amount of the condensing medium within the unit time varies by controlling an opening position of a condensing medium valve.

9. The method for adjusting the amount of the condensing medium according to the control period of the heater according to any one of claims 1 to 5, wherein in the S4, the unit time length of supplying the condensing medium is adjusted according to the state of the control period of the heater.

10. The method for adjusting the amount of the condensing medium according to the control period of the heater according to claim 9, wherein when the heater is switched on, the unit time length of supplying the condensing medium is prolonged; and when the heater is switched off, the unit time length of supplying the condensing medium is shortened.

11. The method for adjusting the amount of the condensing medium according to the control period of the heater according to claim 10, wherein the unit time length of supplying the condensing medium varies by controlling an opening time and a closing time of the condensing medium valve.

12. The method for adjusting the amount of the condensing medium according to the control period of the heater according to any one of claims 1 to 5, wherein a rise rate of the outlet air temperature is increased, the switching-on and switching-off interval of the heater is shortened, the supplying amount of the condensing medium within the unit time is reduced, or the unit time length of supplying the condensing medium is shortened.
